Europäisches Patentamt

European Patent Office

Office européen des brevets

(11) Publication number : **0 473 422 A1**

# (12) EUROPEAN PATENT APPLICATION

(21) Application number : 91307899.4

(22) Date of filing : 29.08.91

(51) Int. Cl.⁵ : **B29C 67/18**, B29C 67/14, B29D 9/00, B29B 11/16

(30) Priority : **30.08.90 US 575221**

(43) Date of publication of application :
**04.03.92 Bulletin 92/10**

(84) Designated Contracting States :
**AT BE CH DE DK ES FR GB IT LI LU NL SE**

(71) Applicant : **THE DOW CHEMICAL COMPANY**
**2030 Dow Center Abbott Road**
**Midland, MI 48640 (US)**

(72) Inventor : **Hoenke, Mark S.**
**4620 Pineridge Drive**
**Stow, Ohio 44224 (US)**

(74) Representative : **Raynor, John et al**
**W.H. Beck, Greener & Co 7 Stone Buildings**
**Lincoln's Inn**
**London WC2A 3SZ (GB)**

(54) **Method and apparatus for producing mold charge blanks for molding processes.**

(57)   Apparatus (20) for continuously producing fiber reinforced mold charge blanks for molding processes including, a creel assembly (21) for laying up a plurality of layers of fibrous matting to form a compound sheet of fibrous matting, a fiber feeder mechanism (22) operatively interrelated with the creel assembly for effecting disposition of fibers between the layers of fibrous matting to form a compound sheet of reinforced fibrous matting, a reprocessing system (150) for converting scrap matting to reinforcing fibers, slitting mechanism (23) for cutting the compound sheet into a plurality of strips of a width substantially equal to the cross-sectional extent of the preforms, a creel transfer assembly (24) for selectively effecting transition in the supply of the fibrous matting from one creel to another creel of the creel assembly, cutting mechanism (25) for severing the strips into mold charge blanks of a length substantially equal to the length of the preforms, a take-away conveyor (26) for moving the mold charge blanks from the cutting mechanism, an oven conveyor for transporting the mold charge blanks from the take-away conveyor through to an oven (28) for the controlled heating thereof, and a shuttle assembly (29) for transferring the mold charge blanks from the oven conveyor to a press (30), the press effecting molding of the mold charge blanks.

EP 0 473 422 A1

FIG. 1

The present invention relates to the manufacture of fiber mold charge blanks. Fiber mold charge blanks provide structural reinforcement for various plastic resins, including, for instance, polyester, epoxy, and polyurethane. Apparatus is provided for essentially continuous, automatic production of mold charge blanks at high output rates. A method for the production of such fiber mold charge blanks is also provided.

Reinforced plastics are composite structures in which a resin, either thermosetting or thermoplastic, is combined with a reinforcing member to strengthen and improve various properties of the plastic matrix. Particularly useful processes include resin transfer molding (RTM) and structural reaction injection molding (S-RIM). The former usually employ epoxies of polyester resins, although other thermosetting resins can also be employed. Polyurethanes are employed in S-RIM systems.

Both processes employ a fiber preform or mold charge blank which may approximate the shape of the composite products or at least provides a structural backbone for the product. The mold charge blank is placed inside of multiple-piece mold, and deformed to the shape of the desired finished product after which the liquid resin or reaction components are transferred into the closed mold to impregnate the reinforcement material and fill all void space within the mold. Liquid molding may be done in the forming mold or the reinforcement may be transferred or stored for subsequent molding.

Such composite products are currently of particular interest and importance in the automotive industry where features such as weight reduction, strength, appearance, durability, flexibility, and consolidation of parts are considered. Automobile bumpers, for instance, made of polyurethanes offer the described flexibility and appearance characteristics and when reinforced with fibers from a mold charge blank, provide improved performance characteristics, particularly strength and may also reduce the total number of parts required.

Fiber mold charge blanks are manufactured separately and are supplied to the mold for combination with the liquid resin component(s). A variety of methods have been employed for making mold charge blanks, including the spraying of chopped fibers onto a molded surface and the forming of reinforcing mat or fabric in desired thickness and layers into the shape of the mold charge blank. The fiber material is normally combined with thermoplastic binder material, and the "laid up" material is then placed in a preheated oven, transferred to a mold, pressed by the mold to the desired shape, and cooled to produce the actual mold charge blank which can be handled and stored until final manufacture. The binder material stiffens the mold charge blank, giving it appropriate structural integrity for liquid molding in the forming tool or handleability for storage or transfer to the final mold where resin transfer occurs.

Articles made by S-RIM are produced in very short cycle times, and, hence, the need has arisen for an apparatus and method for the production of fiber mold charge blanks at relatively high rates of production. Additionally, the handling of scrap, including recovery and recycle thereof, is becoming of greater importance, as waste disposal continues to impact the environment and cost of production. Despite the longstanding uses of fiber mold charge blanks, apparatus for the production thereof has not been highly developed; nor has the patent literature provided advances in areas combining production and the handling of scrap.

Exemplary of the patent art, for instance, is U.S. Patent No. 3,703,347 which is directed toward apparatus for recovery of waste thermoplastic fiber and conversion into staple fiber for reuse. Fiber material, such as polyester, is treated in apparatus which includes means for melting and extrusion to provide resusable fiber stock.

U.S. Pat. No. 4,663,225 is directed toward an apparatus for the manufacture of preforms by the air-laying of a batt of fibers. As such, the batt is nonwoven and comprises fibers oriented in all directions. It is first formed as a flat sheet and is resinated with a thermoplastic material if the fibers do not originally include a thermoplastic binder. The batt is then placed in a heated forming mold where the shape of the preform is imparted by air flow through a shaped screen and retained by the binder material.

Neither patent provides apparatus for the production of fiber preforms at high rates or for the recycle of fiber material directly into a preform as it is being manufactured. Nor, do they provide for optimum orientation of the fibers for highest strength and maximum weight reduction.

Therefore, an object of the present invention is to provide a method and apparatus for the automated manufacture of mold charge blanks which are employed in molding processes such as RTM and S-RIM molding operations. Another object of the present invention is to provide such a method and apparatus which results in reduced production costs by minimizing labor involvement and providing high productivity. Still another object of the present invention is to provide such a method and apparatus in which the scrap rate can become essentially negligible by the recycling of scrap to serve as a reinforcing component of the completed mold charge blank. A further object of the present invention is to provide such a method and apparatus which can provide high-quality parts and a high degree of uniformity from part-to-part. Still another object of the invention is to provide such a method and apparatus which is capable of providing geometrically selective reinforcement of mold charge blanks with the reinforcing fibers appropriately aligned to impart optimum strength for the quantity of material employed.

Another object of the present invention is to provide a creel assembly to supply fibrous matting for the manufacture of mold charge blanks for molding processess which unwinds fibrous matting from cardboard tubes on which a roll of the fibrous matting is wound according to industry practice.

Another object of the present invention is to provide a creel for a creel assembly to supply fibrous matting for the manufacture of mold charge blanks consisting of two proximately spaced creels for supplying fibrous matting in which a plurality of rolls of fibrous matting are positioned into substantially vertical rows. Yet a further object of the invention is to provide such a creel which is readily adaptable to conventional edge-guiding equipment and tension-control equipment for the individual rolls in order to increase part quality, reduce trim scrap, and maintain consistency in the production of successive mold charge blanks.

Yet another object of the present invention is to provide fiber feeder mechanism for a system for producing mold charge blanks for molding processes from layers of fibrous matting in which reinforcing fibers are selectively positioned, thereby reducing operating costs by permitting the use of lesser amounts of reinforcing fibers which are selectively placed and selectively oriented to optimize the effects of the reinforcement. Another object of the present invention is to provide such a fiber feeder mechanism which permits selective placement of the reinforcing fibers laterally of and between layers of fibrous matting as they are laid up by a creel.

Another object of the present invention is to provide a reprocessing system for apparatus for the manufacture of mold charge blanks for molding processes in which scrap from trimming and cutting operations is processed into individual fibers which are employed as reinforcing fibers for the mold charge blanks.

Still another object of the invention is to provide a slitting mechanism for apparatus for the manufacture of mold charge blanks for molding operations in which the fibrous matting making up the mold charge blanks is longitudinally slit to substantially the width of the cross-sectional extent of the finished molded part. in the nature of conventional circular knives, vertical reciprocating fabric cutters or the like.

Another object of the present invention is to provide a creel transfer mechanism for apparatus for continuously producing fiber reinforced mold charge blanks for molding processes, which permits the supply of fibrous matting for making the mold charge blanks to be supplied by either of two creels of a creel assembly.

Another object of the invention is to provide a cutting mechanism for apparatus for continuously producing fiber reinforced mold charge blanks for molding processes which pays out a length of the strips of fibrous matting and effects a simultaneous shearing of the strips into mold charge blanks which are substantially the length of the finished molded part. Another object of the invention is to provide such a cutting mechanism having a strip gripping assembly for grasping and paying out the leading edges of the strips of fibrous matting which are held suspended between the gripping assembly and a clamping bar during the cutting operation by a blade.

A further object of the invention is to provide an oven conveyor for apparatus for continuously producing fiber reinforced mold charge blanks for molding processes which interrelates with a take-away conveyor to expand the spacing of the mold charge blanks on the oven conveyor as compared with the spacing on the take-away conveyor.

Another object of the present invention is to provide an oven assembly for apparatus for continuously producing fiber reinforced mold charge blanks for molding processes in which the requisite heating is effected on continuously moving mold charge blanks positioned on an oven conveyor. Still another object of the invention is to provide such an oven assembly wherein a first heating zone heats the mold charge blanks above the melting point of thermoplastic material in the constituent fibrous matting such that subsequently molded and cooled blanks will possess sufficient integrity and stiffness to withstand subsequent handling and molding operations.

Still another object of the invention is to provide a shuttle assembly for apparatus for continuously producing fiber reinforced mold charge blanks for molding processes which effects high-speed transport of heated mold charge blanks from an oven to a press for molding the mold charge blanks into preforms or a press for the final molding operations.

At least one or more of the foregoing objects, together with the advantages thereof over known methods and apparatus relating to the production of preforms or mold charge blanks for subsequent use in RTM and S-RIM molding processes, which shall become apparent from the specification which follows, are accomplished by the invention as hereinafter described and claimed.

In general, the present invention contemplates apparatus for continuously producing mold charge blanks for molding processes including a creel assembly for laying up a plurality of layers of fibrous matting to form a compound sheet of fibrous matting, cutting mechanism for severing the compound sheet into mold charge blanks having the desired dimensions, a conveyor for transporting the mold charge blanks through an oven for the controlled heating thereof, and a shuttle assembly for transferring the mold charge blanks from the conveyor to a press, the press effecting molding of the mold charge blanks.

The present invention further contemplates a method for the continuous production of mold charge blanks for molding processes including the steps of, laying up a plurality of layers of fibrous matting to form a compound sheet of fibrous matting, cutting the compound sheet into mold charge blanks having the desired dimensions, transporting the mold charge blanks through an oven for the controlled heating thereof, transferring the mold charge blanks from the oven to a press, and molding the mold charge blanks in the press.

Figure 1 is an overall schematic perspective view of exemplary apparatus embodying the concepts of the present invention showing generally the various sequential operating stations as arranged to practice the method of the invention.

Figure 2 is a top plan view of the apparatus of Figure 1 showing additional structural details at certain of the operating stations.

Figure 3 is a perspective view of a fragmentary portion of a completed preform assembled on the apparatus of Figure 1, according to the method of the invention, showing details of the reinforced fibrous matting and particularly the arrangement of a plurality of fibrous mats therein and an exemplary placement of reinforcing fibers between the mats extending longitudinally of the preform.

Figure 4 is an enlarged fragmentary cross-sectional view of the strips of the compound sheets taken substantially along the line 4-4 of Figure 2 showing the reinforced fibrous matting and particularly the arrangement of the fibrous mats and the positioning of reinforcing fibers after the lay-up and slitting operations and prior to cutting and molding to the completed preform configuration of Figure 3.

Figure 5 is an enlarged side-elevational view taken substantially along the lines 5-5 of Figure 2 of the double creel assembly which effects lay-up and feeding of the reinforced fibrous matting.

Figure 6 is an enlarged fragmentary side elevational view with portions broken away of the mounting and let-off assembly for a roll of the fibrous mat material in the creel assembly.

Figure 7 is a fragmentary front-elevational view taken substantially along the line 7-7 of Figure 6 of the mounting and let-off assembly for a roll of the creel assembly.

Figure 8 is a fragmentary top plan view taken substantially along the lines 8-8 pf Figure 6 of the mounting and let-off assembly for a roll of the creel assembly.

Figure 9 is an enlarged cross-sectional view taken substantially along the line 9-9 of Figure 2 showing details of a fiber feeder which effects deposition of reinforcing fibers between layers of fibrous mats.

Figure 10 is a cross-sectional view taken substantially along the line 10-10 of Figure 9 showing details of the drum assembly of the fiber feeder.

Figure 11 is a schematic depiction of a reprocessing system which converts scrap collected in operating the apparatus of Figure 1 to reinforcing fibers employed in the fiber feeder.

Figure 12 is a side-elevational view taken substantially along the lines 12-12 of Figure 2 of the automatic creel transfer mechanism which effects transition in the supply of reinforced fibrous matting from one creel of the double creel assembly to the other creel.

Figure 13 is a side-elevational view taken substantially along the line 13-13 of Figure 2 of the cutting mechanism which severs strips of the reinforced fibrous matting to mold charge blanks substantially the length of the completed preform.

Figures 14A-E schematically depict the operative steps of the cutting mechanism depicted in Figure 13.

Figures 15A and 15B, with line A-A of Figure 15A joining with line B-B of Figure 15B, comprise a schematic side-elevational view taken substantially along the line 15-15 of Figure 2 of the conveyor for the cutting mechanism, the oven for heating thermoplastic binder material in the reinforced fibrous matting to its melting point, a shuttle assembly for laterally transferring a mold charge blank, and a press for receiving the mold charge blank from the shuttle and forming the mold charge blank.

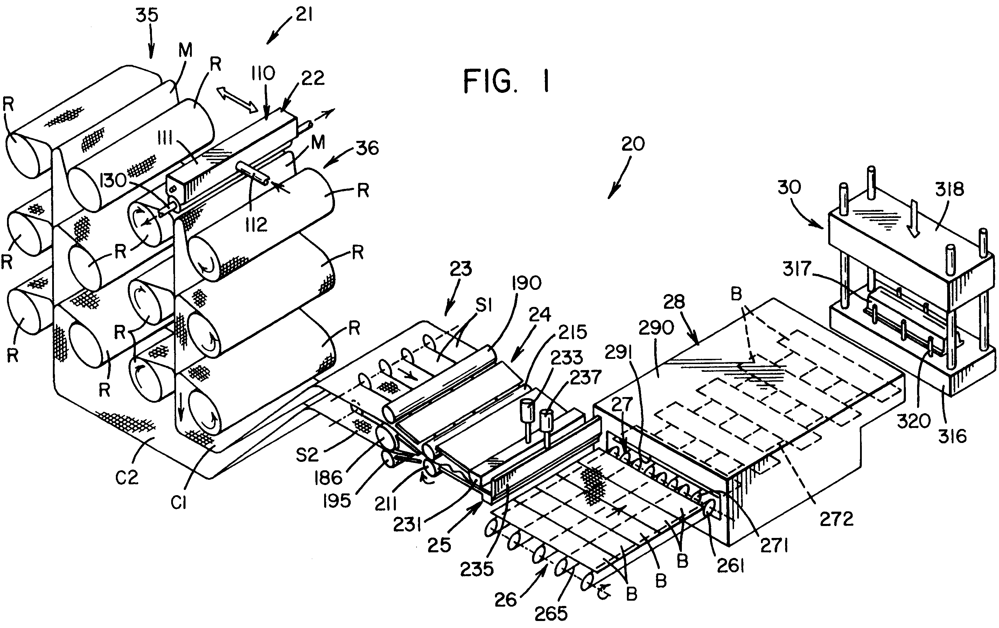

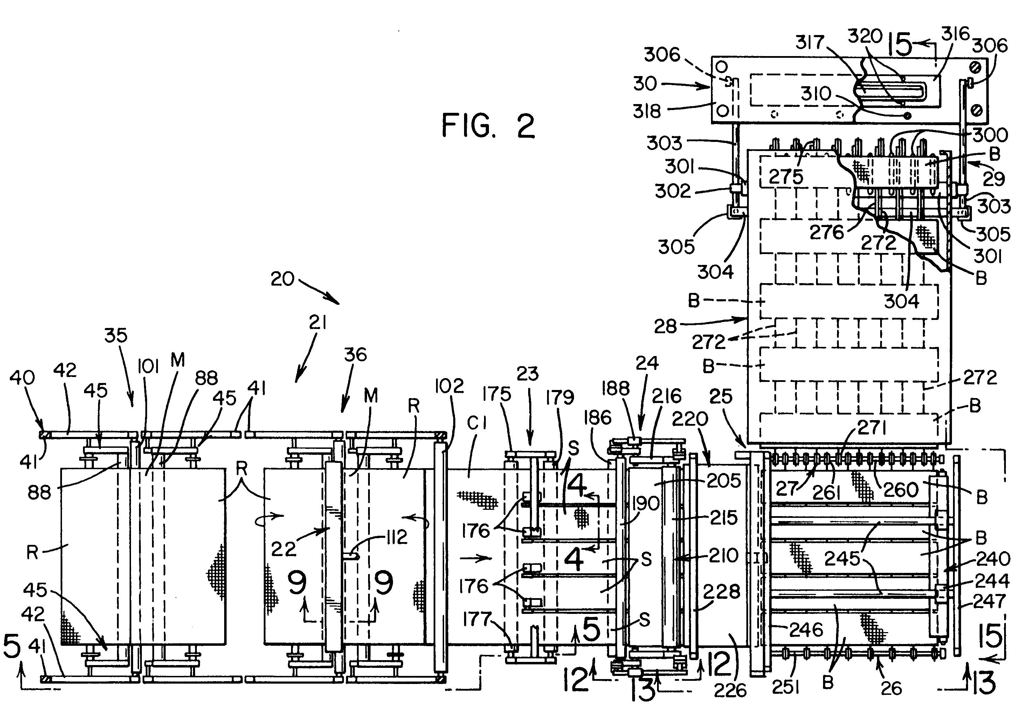

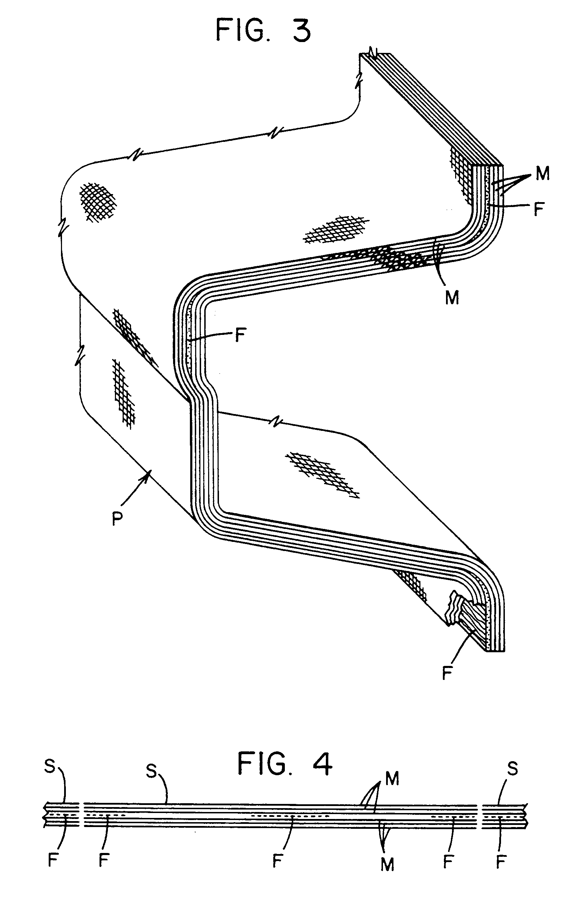

A system for continuously producing fiber reinforced mold charge blanks for molding processes in accordance with the process of the present invention is generally indicated by the numeral 20 in Figures 1 and 2 of the drawings. The system 20 contemplates an arrangement of individual stations which functionally interrelate to create a completed preform P (see Figure 3). Completed preforms P, which are a type of mold charge blank that has been molded to a desired configuration, are employed as primary structural members in a subsequent molding process, as for example in resin transfer molding of composite parts employing a number of known resin systems, including, for example, polyester, epoxy, and polyurethane. Generally, any hardenable fluid, including resins and other reactive chemicals and mixtures thereof can be utilized to impregnate the structural member and form the desired article. For exemplary purposes, the preform P is shown in a configuration suitable for usage in the molding of a bumper for a motor vehicle.

As can be seen in Figure 3 of the drawings, the preform P is composed of a plurality of layers of fibrous matting M. Advantageously, the preform P will have the highest concentration of filaments in the mats M running longitudinally of preform P in the instance where an elongate member, such as a vehicle bumper, is involved to provide the greatest strength with the minimum weight of fibrous matting M. In instances where it is advantageous that a preform P have localized improved strength in selected areas which run the length of the preform P, exemplary reinforcing fibers F are provided in areas of radical curvature at the cross-sectional extremities of a preform P or in other locations which are particularly subject to impact or other more severe loading conditions. Referring now to Figures 1 and 2, the fibrous matting M of the preform P is commonly available in the industry as a processed material in the form of rolls R in which the highest concentration of filaments are normally and most economically disposed longitudinally of the fibrous matting M. The creel assembly, generally indicated by the numeral 21, mounts a plurality of the rolls R for laying up a plurality of layers of the fibrous matting M to form compound sheets C1 and C2, each having the number of layers of the preform P.

A fiber feeder mechanism, generally indicated by the numeral 22, may be operatively interrelated with the creel assembly 21 for effecting deposition of fibers in selected areas laterally of the fibrous matting M to produce the pattern of reinforcing fibers F in the preform P. The reinforcing fibers F are positioned between the layers of fibrous matting M in their selected locations and become part of the compound sheet C supplied by the creel assembly 21. As shown, the creel assembly 21 consists of two separate creels, each mounting a plurality of rolls R and capable of producing compound sheets C1 and C2. Normally, the fiber feeder mechanism 22 may be moved between the two creels of creel assembly 21 to service the supply of compound sheets C1 and C2 from the particular creel of creel assembly 21 which is operating at any given time. The use of two creels in creel assembly 21 gives the capability of providing a continuous supply of material, with one creel of creel assembly 21 being reloaded with rolls R of fibrous matting M while the other creel is operating to serve the system 20.

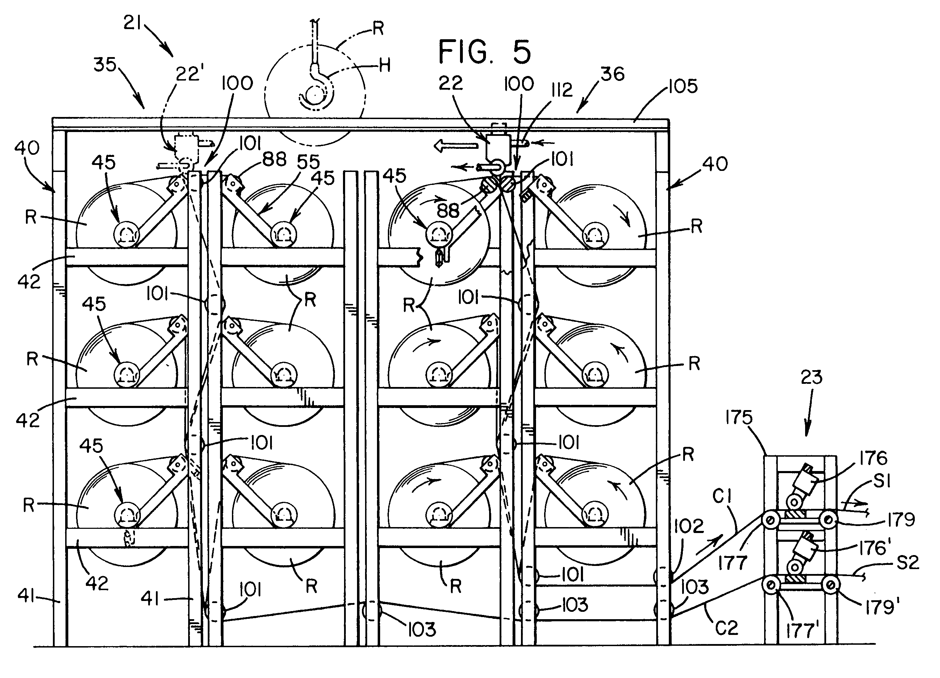

The compound sheets C1, C2 are directed through a slitting mechanism, generally indicated by the numeral 23. The slitting mechanism cuts the compound sheets C1, C2 into a plurality of strips S of a width substantially equal to the cross-sectional extent of the preforms P which are being produced. The substantially laterally adjacent strips S are directed to a creel transfer mechanism, generally indicated by the numeral 24. An exemplary strip S with portions of adjacent strips having the layers of fibrous matting M and reinforcing fibers F, substantially as might be required to form preform P, are shown in Figure 4. The creel transfer mechanism 24 selectively effects transition in the supply of strips S, compound sheets C1 and C2, and fibrous matting M from one creel to the other creel of the creel assembly 21.

The supply of strips S from the creel transfer assembly 24 is directed to a cutting mechanism, generally indicated by the numeral 25. The cutting mechanism 25 pays out a length of the strips S substantially equal to the length of the preforms P, effects a simultaneous shearing of the strips S into mold charge blanks B, which blanks B are gravity deposited on a take-away conveyor, generally indicated by the numeral 26. The take-away conveyor 26 moves the mold charge blanks B in a direction which is substantially perpendicular to the direction the strips S are paid out by the cutting mechanism 25.

The take-away conveyor 26 interrelates with an oven conveyor, generally indicated by the numeral 27, to effect a selective increase in the lateral spacing between the mold charge blanks B as positioned on the oven conveyor 27. The oven conveyor 27 transports the mold charge blanks B through an oven assembly, generally indicated by the numeral 28, for the controlled heating of the mold charge blanks B. The oven assembly 28 may be provided with a plurality of heating zones for heating thermoplastic material in the mold charge blanks B to the melting point and for providing suitable temperature maintenance for subsequent molding of the mold charge blanks B.

Mold charge blanks B exiting the oven assembly 28 on the oven conveyor 27 are picked up by a shuttle assembly, generally indicated by the numeral 29, for transfer to a press, generally indicated by the numeral 30. The press 30 provides molding and trimming of the mold charge blanks B and ejects a completed preform P, which is ready for transport to and incorporation in a subsequent final molding process. In applications where molding of the mold charge blanks B to a molded preform P is not required, the mold charge blanks may be transferred by shuttle assembly 29 directly to the molding tool for the final molding process.

Details of the structural configuration of the creel assembly 21 are shown in Figures 1, 2 and 5-8 of the drawings. As shown, the creel assembly 21 preferably consists of a pair of adjacent creels, generally indicated by the numerals 35 and 36. The creels 35 and 36 may be of essentially identical overall configuration. As shown, each of creels 35, 36 mounts two rows of substantially vertically aligned rolls R. As shown, each vertical row includes three rolls R such that six layers of fibrous matting M may be joined to form a six-layer composite sheet. It is to be appreciated that more or less rolls could be provided in each of the vertical rows of each creel 35 or 36 or that additional vertical rows may be added to a creel, depending upon the number of layers of fibrous matting M required in a particular preform P being manufactured by the system 20. It will also be appreciated that the arrangement of the rolls R in each of the creels 35 and 36 could assume other configurations, such as a somewhat pyramidal orientation, while effecting the requisite supply of fibrous matting M to be consolidated into compound sheets C1 and C2. A particular configuration of the rolls R in creels 35 and 36 may be dictated, in substantial part, by considerations such as the ease of access for replacing expended rolls R with rolls R which are full of fibrous matting M. In this respect, it may be advantageous that the arrangement of rolls R be such as to facilitate the loading and unloading of rolls R from creels 35 and 36 by available mechanical assistance. For example, overhead cranes or hoists having hooks H, as depicted in chain lines in Figure 5, may be employed as depicted to transport full rolls R of fibrous matting M for loading into the creel assemblies 35 and 36. Manual and other methods of loading the rolls R will be appreciated as available options by persons skilled in the art.

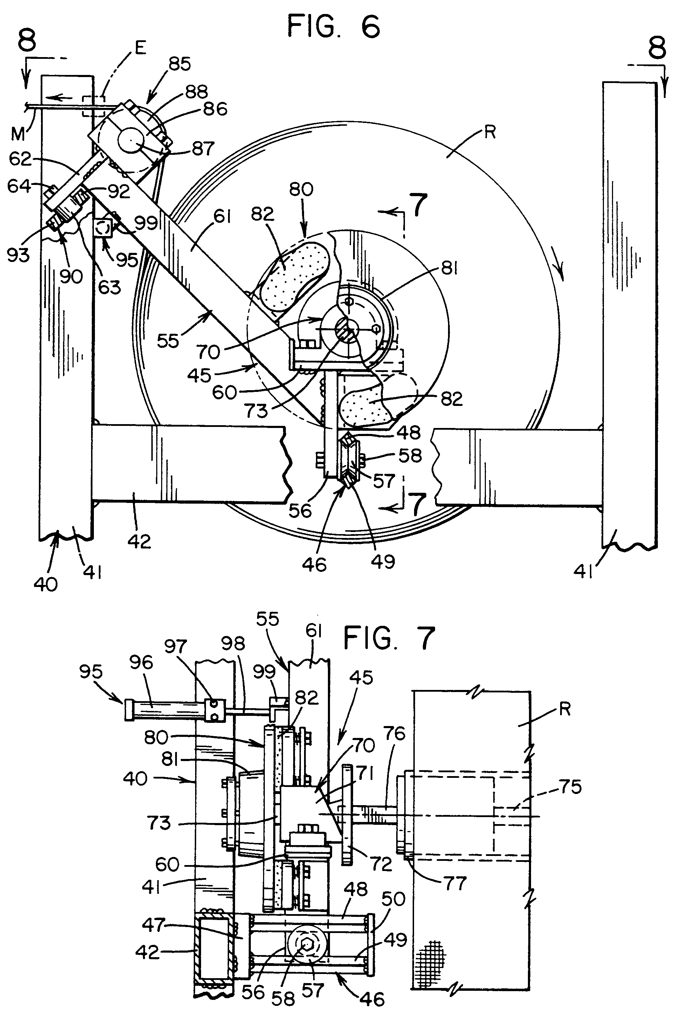

As best seen in Figures 2 and 5, each vertical row of rolls R of each of creels 35 and 36 has a frame assembly, generally indicated by the numeral 40. Due to their similarity, only a single frame assembly 40 is detailed in relation to the drawings. The frame assembly 40 is of a generally rectangular nature as defined by four vertical posts 41. The vertical posts 41 are joined and laterally supported by a plurality of cross beams 42. A cross beam 42 may conveniently be provided proximate the center of each roll R mounted within the frame assembly 40. The rolls R are mounted for free rotation in and lateral displacement relative to the frame assembly 40 by roll mounting assemblies, generally indicated by the numeral 45, as detailed in Figures 6-8 of the drawings. Each roll mounting assembly 45 has a lower track assembly, generally indicated by the numeral 46, which is rigidly mounted to a cross beam 42 as by a mounting plate 47. Projecting in the direction of the rolls R from mounting plate 47 are guide rails 48 and 49, which terminate in an end plate 50. The guide rails 48, 49 are of a rectangular cross section and parallel for purposes of forming a track-like configuration.

The roll mounting assembly 45 has a roll mounting frame, generally indicated by the numeral 55. The roll mounting frame 55 has a vertical support 56 which mounts a V-groove roller 57 on a bolt 58. The V-groove roller 57 is sized to interfit between and matingly engage the rails 48, 49 of the lower track assembly 46. Thus, the entire roll mounting frame 55 is movable relative to the frame assembly 40.

The roll mounting frame 55 has positioned atop the vertical support 56 a mounting block 60. Attached to the mounting block 60 is a chuck assembly, generally indicated by the numeral 70. The chuck assembly 70 may be any of a number of safety chucks which are available in the industry. As shown, the chuck assembly 70 has a socket 71 and a pivot ring lock 72. The chuck assembly 70 is adapted to receive a core bar 75 having square shafts 76 at the axial extremities thereof. The socket 71 is designed to matingly engage and rotate with the square shaft 76. The core bar 75 is adapted to interfit within the center bore of conventional cardboard cores 77 on which rolls R of fibrous matting M are wound. The pivot ring lock 72 of the chuck assembly 70 is movable to lock the square shaft 76 in the socket 71 during operation of a creel 35 and to open to permit removal of the core bar 75 and core 77 to replace an empty core 77 with a new core 77 having a full complement of fibrous matting M.

The chuck assembly 70 has an extension shaft 73 which projects axially thereof in the direction opposite the pivot ring lock 72. The extension shaft 73 rotates with the square shaft 76 of core bar 75 and is operatively engaged by a conventional tension brake, generally indicated by the numeral 80. In the form shown, tension brake 80 is an electric brake configuration having a hub 81 and a pad and carrier mechanism 82. In conventional fashion, the tension brake 80 is operative to maintain controlled tension in the fibrous matting M during rotation of rolls R and shafts 76, 73 to unwrap the fibrous matting M.

The roll mounting frame 55 has a connecting arm 61 extending angularly upwardly from the vertical support 56. The extremity of connecting arm 61 opposite vertical support 56 mounts a roller support arm 62. The roller support arm 62 carries a roller 63, which may be secured by a bolt 64.

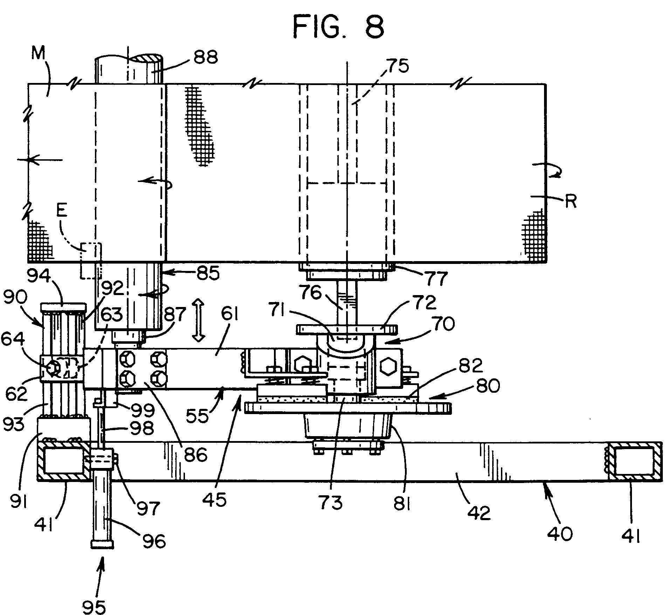

Mounted on arm 61 of roll mounting frame 55 and radially outwardly of the roll R is an idler roll assembly, generally indicated by the numeral 85. The idler roll assembly 85 includes a clamp block 86, which supports a shaft 87 on which an idler roll 88 is mounted. As best seen in Figures 6 and 8, the fibrous matting M, which is unwrapped from the roll R, engages and wraps to a significant circumferential extent about idler roll 88.

Located in proximity to idler roll assembly 85 is an upper track assembly, generally indicated by the numeral 90. The upper track assembly 90, which is similar to lower track assembly 46, is rigidly mounted to a vertical post 41 by a mounting plate 91, as best seen in Figure 8. Projecting in the direction of the rolls R from mounting plate 91 are guide rails 92 and 93, which terminate in an end plate 94. The guide rails 92 and 93 are of a rectangular cross section and parallel for purposes of forming a track-like configuration. The roller 63 of roller support arm 62 is sized to interfit between and matingly engage the rails 92, 93 of the upper track assembly 90. Thus, the entire roll mounting frame 55 is laterally movable relative to the frame assembly 40.

The rolls R all have a roll mounting assembly 45 at each axial extremity thereof to provide for the requisite lateral displacement relative to the frame assembly 40 in order to compensate for inherent irregularities in the edges of the fibrous matting M and inaccuracies in the wrapping about the cores 77 which necessarily occur in the manufacture of the rolls R. The lateral positioning of roll mounting assemblies 45 relative to frame assembly 40 is effected by a roll steering assembly, generally indicated by the numeral 95, located proximate one of the two roll mounting assemblies 45 associated with each of the rolls R. The roll steering assembly 95 has a cylinder 96 which is attached to vertical post 41 of frame assembly 40 as by a fastener 97. The cylinder 96 has a piston rod 98 which carries a bracket 99 attached to the connecting arm 61 of the roll mounting frame 55. It will, thus, be appreciated that actuation of the cylinder 96 effects lateral displacement of the roll mounting assemblies 45 at either extremity of the rolls R and idler rolls 88 to effect alignment of each of the rolls R to achieve substantial edgewise coincidence of the layers of fibrous matting M as consolidated into the compound sheets C1, C2 by creels 35, 36.

A conventional edge sensor E is schematically depicted in chain lines in Figures 6 and 8 for purposes of sensing the position of the edge of fibrous matting M at any instant in time. The edge sensor E provides suitable signals for controlling the cylinder 96 of roll steering assembly 95, such as to continuously monitor and correct, as necessary, the position of fibrous matting M unwinding from a roll R over idler roll 88 to provide continuous steering of the lateral position of fibrous matting M during unwinding of each of the rolls R. Operational details of such steering apparatus are known to persons skilled in the art.

Between each of the two vertical rows of rolls R of creels 35 and 36, there is a feed path, generally indicated by the numeral 100, as best seen in Figure 5 of the drawings. The feed path 100 is composed of a plurality of vertically spaced idler rolls 101. The idler rolls 101 are positioned to facilitate the application of layers of fibrous matting M, as the fibrous matting M is joined from the top two rolls R to form the innermost layers, two additional layers of fibrous matting M are placed by the intermediate two rolls R, and the outer layers of fibrous matting M are placed by the bottom two rolls R. The compound sheets C1 and C2 thus formed are directed outwardly of creels 36 and 35, respectively, by appropriately positioned guide rolls 102 and 103, respectively. As shown, the compound sheets C1 and C2 depart from the creel assembly 21, as directed by guide rolls 102 and 103, in spaced, substantially parallel alignment for subsequent processing as hereinafter described.

In the event that reinforcing fibers F are desired in the completed preform P, the system 20 is provided with the fiber feed mechanism 22. In order to position the reinforcing fibers F medially of the layers of fibrous matting M of the preform P, the fiber feeder mechanism 22 is advantageously placed in close proximity to and substantially equidistant from the vertically uppermost idler roll 101 of the feed path 100 and an idler roll 88 of roll mounting assembly 45 for an upper roll R of creel assemblies 35, 36 (Figure 5). In this manner, reinforcing fibers F are interposed between the innermost layers of fibrous matting M of preform P (Figure 3). If desired, in instances where both of the creels 35, 36 may be simultaneously employed, a fiber feeder mechanism 22 thus positioned may be provided for each of the creels 35 and 36. In instances where the creels 35 and 36 are only alternately employed, a single fiber feeder may be employed in the manner depicted in Figure 5. In this latter instance, an overhead rail 105 is positioned between vertical posts 41 of frame assembly 40 to movably support the fiber feeder mechanism 22 which is thus adapted for travel between the solid line position atop creel 36 to the chain line position 22' atop the creel 35. This arrangement is advantageous in that a single fiber feeder mechanism 22 may service two or more creel assemblies 35, 36.

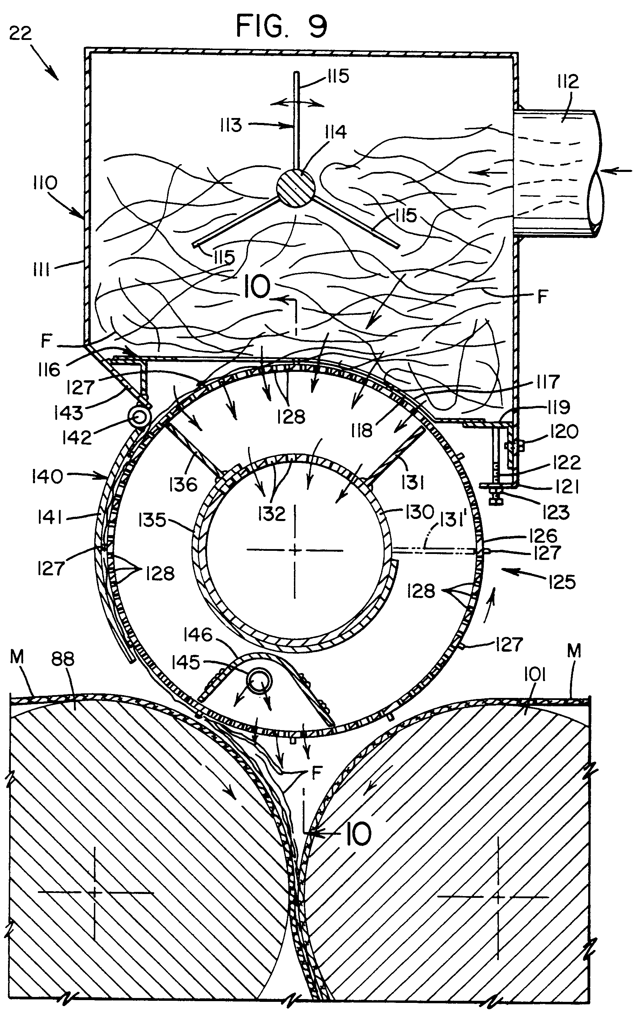

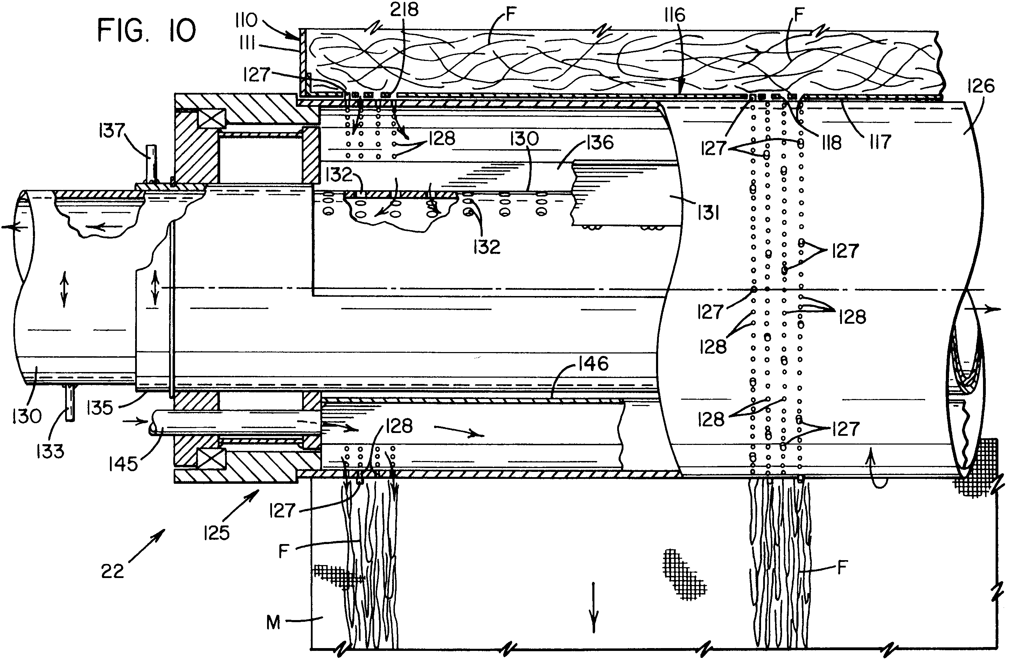

Details of the fiber feeder mechanism 22 are shown in Figures 9 and 10 of the drawings. As shown, the fiber feeder mechanism 22 has a hopper assembly generally indicated by the numeral 110. As best seen in Figure 1, the hopper assembly 110 has an elongate enclosed supply bin 111, which is of a generally rectangular cross-sectional configuration. The supply bin 111 preferably is of, a longitudinal extent equal to the lateral dimension of the fibrous matting M.

The supply bin 111 is provided with reinforcing fibers F, which may be made of any desired material, to effect the type of reinforcing desired for a particular application. As shown, the reinforcing fibers F enter the supply bin 111 through a tube 112, which is part of a pneumatic conveying system in which the fibers F are suspended in a moving air stream. Depending upon the material and geometric nature of the reinforcing fibers F or upon restrictions in plant layout, a gravity or mechanical feeding system might be employed in lieu of or in combination with the pneumatic conveying system depicted herein.

Depending upon the nature of the reinforcing fibers F, the configuration of the supply bin 111, and the entry location of the tube 112, the supply bin 111 may be provided with a rotating paddle 113, which advantageously extends the length of the supply bin 111. As shown, the paddle 113 has a central shaft 114 having a plurality of vanes 115 extending radially and axially thereof. The paddle 113 may be conventionally driven as by a motor (not shown). Thus, it will be appreciated that the combination of the moving air stream entering supply bin 111 through tube 112 and the action of paddle 113 will serve to uniformly distribute the reinforcing fibers F to a substantially uniform depth in supply bin 111 over the full longitudinal extent thereof.

The supply bin 111 of hopper assembly 110 has a uniquely configured bottom plate 116. Extending the longitudinal length of bottom plate 116 is a circular delivery area 117. The delivery area 117 has slots 118 extending laterally of the supply bin 111 at least through the delivery area 117 and, as shown, a distance therebeyond, as seen in Figures 9 and 10. The bottom plate 116 is also vertically adjustable over a short range by a support bracket 119 which underlies one side of bottom plate 116. The support bracket 119 is attached to the supply bin 111 by a fastener 120. The supply bin 111 has a downward angled extension 121 through which an adjusting screw 122 extends and contacts the angle bracket 119 for adjustably vertically positioning it and the bottom plate 116 reposing thereon. A nut 123 may be positioned on adjusting screw 122 for locking it and bottom plate 116 in any selected position.

Relatively fixed and in juxtaposition to the bottom plate 116 of supply bin 111 is a fiber placement assembly, generally indicated by the numeral 125. The fiber placement assembly 125 includes a drum 126 which has a radius substantially equal to the radius of the circular delivery area 117 of bottom plate 116. As best seen in Figure 10, the drum 126 has pins 127 in circumferential rows which are exactly aligned with the slots 118 of bottom plate 116 of supply bin 111. The pins 127 are preferably circumferentially spaced about the drum 126 at selected locations, depending upon the length and other geometric characteristics of the reinforcing fiber F. It will also be appreciated that protuberances of other configurations could be employed in lieu of pins 127. As can be noted particularly in Figure 9 of the drawings, the pins 127 extend into or through the slots 118 to catch or engage individual reinforcing fibers F as the drum 126 is rotated counterclockwise as viewed in Figure 9. The feed rate of reinforcing fibers R may be influenced by the circumferential spacing between the pins 127. In addition, the probability that each pin 127 will pick up a reinforcing fiber F during travel through the slots 118 may be sinificantly enhanced by altering the extent to which the pins 127 extend into or through the slots 118. In this respect, the vertical adjustment of bottom plate 116 of supply bin 111 by virtue of adjusting screw 122 can be employed to vary the gap between drum 126 and bottom plate 116 and, thus, adjust the feed rate of the reinforcing fibers F.

The drum 126 may be provided with a series of holes 128, circumferentially interspersed at regular or irregular intervals, between the pins 127. Air introduced to the supply bin 111 from the pneumatic conveying system, together with air introduced into the gap between the drum 126 and the bottom plate 116 of bin 111, is drawn through the holes 128. The passage of air through the holes 128 operates to adhere the reinforcing fibers F in circumferential alignment on the drum 126 after they are so positioned due to their engagement by the pins 127 on rotating drum 126 and the operation of slots 118 in bottom plate 116 to effect the requisite circumferential alignment.

A normally fixed circular duct 130 is positioned interiorly of the drum 126 of fiber placement assembly 125. The duct 130 has a vane 131 extending axially outwardly to a position in close proximity to, but not engaging, the rotating drum 126. The duct 130 has a plurality of apertures 132 which communicate interiorly of duct 130 which is connected to a low-pressure source as hereinafter described. As a result, air drawn through the holes 128 in the drum 126 is evacuated centrally of the duct 130. The duct 130 may be rotated as by an attached handle 133 so as to adjust the amount and the location of air flow through holes 128 of drum 126 to optimize the adherence of reinforcing fibers F in their circumferentially aligned position on drum 126. The vane 131 is shown in an angularly displaced position 131', in Figure 9, which would result in the collection of substantial amounts of air from outside the system and a reduced intake through the holes 128 in proximity to the slots 118 of bottom plate 116. Thus, suitable adjustment of the handle 133 to rotate the duct 130 can be made to optimize the pick up and alignment of reinforcing fiber F, depending upon the particular characteristics of the reinforcing fibers F being employed for the manufacture of a particular preform P.

The duct 130 may be provided with a concentric overlying arcuate tube 135 which preferably has a circumferential extent only slightly greater than one-half the circumference of the duct 130. The tube 135 is provided with a vane 136 similar to vane 131 and an exterior handle 137 for rotational adjustment of the position of the tube 135. The rotational adjustment of the position of vane 136 serves to define the length of the sector between it and vane 131, through which air is drawn into the holes 128 in drum 126. In addition, as shown in Figure 9, the tube 135 may be positioned to overlie a portion of the apertures 132 in duct 130 such as to increase the flow rate of air drawn into the duct 130.

The reinforcing fibers F which are attached to the pins 127 of drum 126 proximate the supply bin 111 are maintained in circumferential alignment on the drum 126 during further counterclockwise rotation, as viewed in Figure 9, by a clamping assembly, generally indicated by the numeral 140. The clamping assembly 140 shown in Figure 9 consists of an arcuate plate 141 of substantially the diameter of the drum 126 which extends the longitudinal extent thereof. The arcuate plate 141 may be suspended by a hinge 142 supported on a downwardly extending flange 143 of the supply bin 111. It will be noted that the flange 143 also serves to create a closed compartment in the area where air is being drawn through the holes 128 in drum 126. As shown, the plate 141 is gravity-biased toward the drum 126 and particularly the pins 127 to maintain the reinforcing fibers F in their circumferential position. If desired, the plate 141 could be spring-loaded or otherwise biased or locked into the position depicted in Figure 9.

The positioning of the fiber feeder mechanism 22 in proximity to rolls 88, 101, as aforedescribed, is such that drum 126 or the pins 127 contact or, as shown in Figure 9, are spaced a slight distance from the fibrous matting M traveling on idler roll 88. The drum 126 is positioned with its axis substantially paralleling the axis of idler roll 88 so that the reinforcing fibers F are transferred to the fibrous matting M in a longitudinal orientation relative to the fibrous matting M and in locations laterally of the fibrous matting M, as dictated by the position of the pins 127 axially of drum 126. It is to be noted that, with the discharge area for the reinforcing fibers F in the vertically lower portion of drum 126, gravity forces assist in the controlled deposition of the reinforcing fibers F on the fibrous matting M.

For some materials, it may be advantageous to employ a fixed tube 145 connected to a source of pressurized air to create a downwardly directed air flow through the holes 128 in drum 126 in the discharge area. The fixed tube 145 communicates interiorly of a baffle 146 fixedly mounted within drum 126 for purposes of directing and localizing the air flow such as to insure release of the reinforcing fibers F from the drum 126 and particularly the pins 127. It is also advantageous that the drum 126 be powered by a conventional variable speed motor (not shown) so that the velocity of the reinforcing fibers F, as carried on the surface of drum 126, can be varied slightly above and below the velocity of the fibrous matting M. Depending upon the particular material of the reinforcing fibers F and the fibrous matting M, adhesives or other expediencies might be advantageously employed to facilitate the accurate transfer of reinforcing fibers F from the drum 126 to the longitudinally aligned positions desired on the fibrous matting M.

There are a number of possible sources of the reinforcing fibers F which are introduced to the fiber feeder mechanism 22 via the tube 112. If a special type of reinforcing fiber F is required, it may be supplied as new material from a container in the area which introduces it to the pneumatic conveying system. Alternatively, the reinforcing fiber F could be supplied from a process or as a byproduct of another manufacturing operation in the facility. In instances where the fibrous matter in the fibrous matting M can be employed as the reinforcing fibers F, the present invention contemplates the option of recycling the scrap generated by the system 20 to create a no-waste system. This has the ancillary benefit of obviating the need for waste disposal.

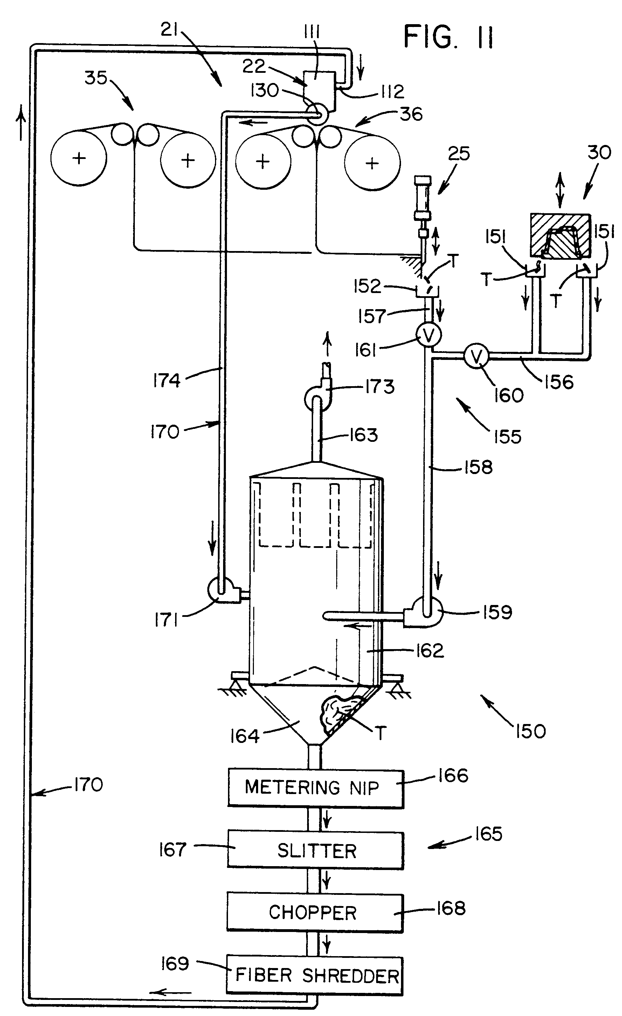

Apparatus for recycling fibers from scrap generated by the system 20 is shown in the form of a reprocessing system, generally indicated by the numeral 150 in Figure 11. As constituted, the system 20 contemplates the generation of scrap at two locations, namely, in conjunction with the trimming, which takes place at the press 30 and at the cutting mechanism 25. As a result, collectors 151 collect trimmings T at the press 30, and collectors 152 collect trimmings T at the cutting mechanism 25. The collectors 151 communicate with a negative pressure pneumatic conveyor system, generally indicated by the numeral 155, for transporting the trimmings T. The pneumatic conveyor system 155 includes branch conduit 156 communicating with the collectors 151 and branch conduit 157 communicating with the collectors 152. The branch conduits 156, 157 are combined in a main conduit 158 which has a blower 159 positioned therein. Branch conduits 156 and 157 may be provided with suitable valves 160 and 161, respectively. The valves 160 and 161 provide control of the supply of trimmings T to main conduit 158 from either the branch conduit 156 or the branch conduit 157. The trimmings T, thus collected, are air transported in the main conduit 158 to a filter 162. The filter 162 effects separation of the fibers and chunks constituting the trimmings T from the air in which it is entrained. Thus processed, the air may be returned to the facility environment by way of an outlet conduit 163. The outlet conduit 163 may be provided with a blower 171 which is regulated to control the air pressure within filter 162 slightly below atmospheric pressure, thus maintaining the reprocessing system 150 at a slight negative pressure.

The chunks and fibers constituting the trimmings T, which are separated from the air in filter 162, are collected at the bottom of the filter 162 and are introduced as by a vibrating feed tray 164 in the bottom of filter 162 into a processor, generally indicated by the numeral 165. The processor 165 normally includes a metering nip 166 which controls the rate the trimmings T are fed from the bottom of the filter 162. The metering nip 166 may consist of a live bottom bin and/or regulated nip rolls as appropriate for a controlled feed rate of the particular trimmings involved in processing particular materials. If necessary, a slitter 167 and a chopper 168 may be employed to reduce the trimmings T to appropriate geometric dimensions to constitute the reinforcing fibers F. Finally, the processor 165 has a fiber shredder 169 which reduces the trimmings to individual fibers, as required for the make-up of the reinforcing fibers F for the fiber feeder mechanism 22. It will be appreciated by persons skilled in the art that depending upon the nature of the trimmings T, only such of the slitter 167, chopper 168, and fiber shredder 169 operations as are necessary for a particular type of trimmings T will be employed in a particular processor 165. If desired, the slitter 167, chopper 168, or other elements may be appropriately by-passed during operations on certain trimmings T.

The trimmings T exiting the fiber shredder 169 of the processor 165 are conveyed via a pneumatic conveying system, generally indicated by the numeral 170, which may be powered by a blower 171 to the fiber feeder mechanism 22. There, the trimmings T are introduced via the tube 112 to the supply bin 111, as seen in Figures 11 and 9. The line 174 of pneumatic conveying system 170 in which blower 171 is installed connects filter 162 with the duct 130 of fiber feeder mechanism 22 (See Figure 11).

The compound sheets C1 and C2 exiting creels 36 and 35, with reinforcing fibers F disposed as desired, are directed to the slitting mechanism 23. As best seen in Figure 5, the slitting mechanism 23 may consist of an upstanding frame 175, which may conveniently mount a plurality of laterally-spaced slitters 176 and 176′. The slitting mechanism 23 also includes a pair of vertically displaced input idler rolls 177 and 177′ which receives the compound sheets C1 and C2, respectively, from the guide rolls 102 and 103, respectively, of the creel assemblies 35, 36. The path of compound sheets C1 and C2 in relation to slitters 176 and 176′ is defined by another pair of vertically displaced output idler rolls 179 and 179′ as positioned in relation to input idler rolls 177 and 177′. The compound sheets C1 and C2 are uniformly pulled through the slitting mechanism 23 by the creel transfer mechanism 24. The slitting mechanism 23 mounts as many laterally-spaced slitters 176, 176′ as is necessary for purposes of severing the compound sheets C1, C2 into the number of strips S that can be produced, depending upon the width of strips S as is dictated by the cross-sectional extent of the preforms P being produced. The slitting mechanism 23 that is schematically shown in Figures 1, 2, and 5 may be any of numerous types which are known to the industry. As shown, the laterally-spaced slitters 176, 176′ are of the well-known circular knife type. It will be appreciated that conventional reciprocating cutters could also be employed to effect the requisite slitting operation of the slitting mechanism 23.

The lateral row of strips S1 and S2 formed by slitters 176 and 176′ respectively, from the compound sheets C1 and C2 subsequently enter the creel transfer mechanism 24. The strips S1, S2 entering creel transfer mechanism 24 enter a transfer nip assembly, generally indicated by the numeral 185. The transfer nip assembly 185 includes a stationary roller 186 positioned intermediate the strips S1 and the strips S2. The stationary roller 186 is mounted on a platform 187 attached to the frame 188 of creel transfer mechanism 24. The stationary roller 186 is driven by a motor 189 for selective rotation in either direction.

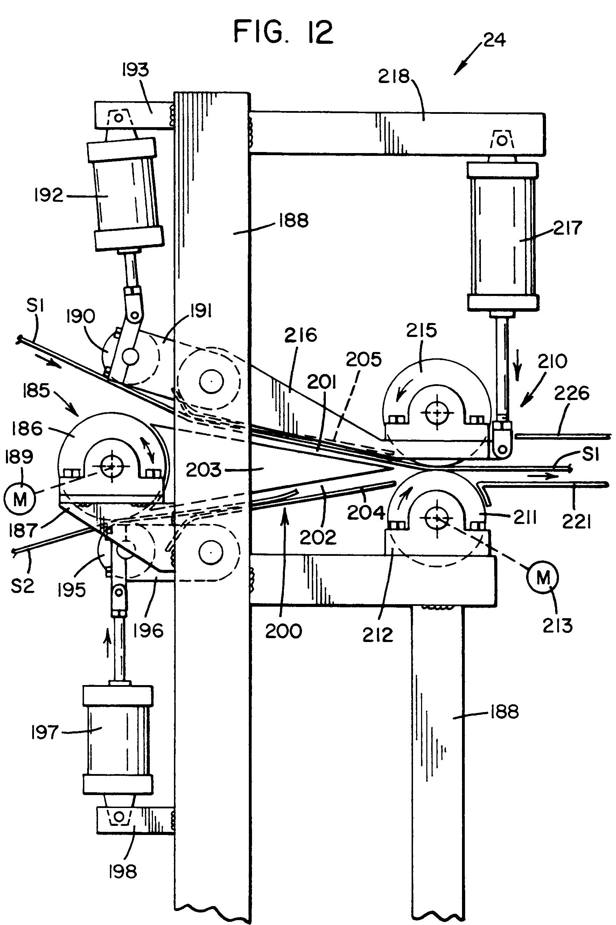

The transfer nip assembly 185 has an idler roll 190 mounted in operative relation to the stationary roller 186 vertically above the strips S1, as seen in Figure 12. The idler roll 190 is mounted for pivoting engagement with the stationary roller 186 by a pivot link 191, which is pivotally attached to the frame 188. The pivotal motion of idler roll 190 is actuated by cylinders 192 attached to a cross beam 193, which is affixed to the frame 188. During normal operation of the system 20, the idler roll 190 is positioned as seen in Figure 12 when the strips S1 originating from fibrous matting M in creel 36 serve as the source of material.

Disposed vertically downwardly of the stationary roller 186 is an idler roll 195, which is disposed vertically below the strips S2. In a manner similar to the idler roll 190, the idler roll 195 is pivotally mounted by a link 196, which may also be pivotally mounted on the frame 188. The pivotal motion of idler roll 195 is actuated by cylinders 197, which are attached to brackets 198 that may also be rigidly attached to the frame 188. The idler roll 195 is depicted in Figure 12 in its position in engagement with stationary roller 186, with the strips S2 clamped therebetween. The strips S1, S2 passing through the transfer nip assembly 185 of creel transfer mechanism 24 are directed into a strip guide mechanism 200. The strip guide mechanism 200 is in the nature of a bifurcated guide mechanism having guide tracks 201 and 202 which are of a converging orientation, i.e., in the direction of travel of strips S from left to right in Figure 12. The tracks 201, 202 are inwardly bounded by a triangular guide 203 and outwardly bounded by rails 204 and 205.

Strips S1 or S2 exit the strip guide mechanism 200 in close proximity to drive nip assembly 210. As seen in Figure 12, the drive nip assembly 210 has a stationary drive roller 211 mounted on a block 212, which is attached to a portion of frame 188. As shown, the drive roller 211 is selectively driven in the direction indicated by the arrow in Figure 12 by a conventional motor 213.

The drive nip assembly 210 includes a movable roller 215 mounted on a block 216 which is pivotally mounted on frame 188 for actuation by cylinders 217 attached to brackets 218, which are also attached to frame 188. It is to be appreciated that either of the rolls 211, 215 could be powered, either could be movable, or either could be both powered and movable.

The creel transfer mechanism 24 is depicted in Figure 12 of the drawings in a normal operating mode, with creel 36 supplying fibrous matting M in the form of the strips S1 passing through the creel transfer mechanism 24. In this operating mode, the idler roll 190 is engaging the strips SI, which are traversing the track 201 and passing through the rolls 211, 215 of the drive nip assembly 210. The creel 35 has been loaded with rolls R and the fibrous matting M from each of the rolls R threaded around the idler rolls 101 and rolls 103 and through the slitting mechanism 23, with the resultant strips S2 threaded through the transfer nip assembly 185 and into the track 202 of strip guide mechanism 200. The cylinder 197 has been actuated to move the idler roll 195 into engagement with the stationary roller 186, which is not being driven by motor 189 to clamp the strips S2 fixed in the position depicted in Figure 12.

When the first roll R of the rolls R on creel 36 is depleted of fibrous material M as detected by conventional rotational sensors (not shown) on the roll mounting assemblies 45, the drive nip assembly 210 will continue to drive until such time as there is an insufficient length of strips S1 to constitute a sufficient length of strips S1 of the six layers of fibrous matting M to form preforms P of the requisite length. At that time, the cutting mechanism 25 is programmed to cut the remaining material in strips S1 into short lengths of scrap by rapid recycling. These short-length scraps may be recovered as trimmings T in the collectors 152 of the reprocessing system 150.

As the trailing edges of strips SI pass through the drive nip assembly 210, the stationary roller 186 of transfer nip assembly 185 commences rotation in a counterclockwise direction, as viewed in Figure 12, and commences driving strips S2 from the position depicted in Figure 12 toward the drive nip assembly 210. The strips S2 may feed into the drive nip assembly 210 without assistance. However, if necessary, the cylinders 217 of drive nip assembly 210 may be actuated to displace movable roll 215 away from drive roll 211 to effect placement of the strips S2 therebetween. Once placement is effected, cylinders 217 are again actuated to return movable roll 215 to the position depicted in Figure 12 to commence drive of the strips S2. The leading edge of strips S2 operates to push any residual portions of the trailing edges of strips S1 into the cutting mechanism 25. Once the strips S2 reach an appropriate position in the cutting mechanism 25, the system 20 resumes normal operation for the manufacture of preforms P.

Once the strips S2 enter and are being driven by the drive nip assembly 210, the cylinders 197 are actuated to withdraw idler roll 195 from the position of Figure 12 in contact with the stationary roller 186 to a spaced position therefrom with the strips S2 being guided solely by idler roll 195 into the drive nip assembly 210. Rotation of the stationary roller 186 may be discontinued at this time by stopping motor 189. It is to be appreciated that the system 20 is now operating on fibrous matting M from the creel 35, which is converted into the strips S2.

During the initial unwrapping of the fibrous matting on the rolls R in creel 35, the rolls R in creel 36, which are empty, may be replenished with rolls R having a full complement of fibrous matting M. The fibrous matting M on rolls R of creel 36 are initially manually started about the idler rolls 88 of roll mounting assembly 45 and the idler rolls 101 of the feed path 100 and thence outwardly of creel assembly 21 via the guide roll 102. The compound sheet C1 thus formed is further aligned and manually fed through the slitting mechanism 23 until the leading edges of the resultant strips S1 extend into the transfer nip assembly 185, which is in the position depicted in Figure 12. Once the leading edge of the new strips S1 are inserted in the transfer nip assembly 185, the cylinder 192 is actuated to move idler roll 190 into engagement with stationary roller 186 to clamp the strips S1 therebetween. The strips S1 then remain clamped at the transfer nip assembly 185 until the source of strips S2, by way of a roll R in creel 35, is depleted of fibrous matting M. At such time, the identical series of steps take place to effect transfer of the supply of strips S from creel 35 back to creel 36 or from the strips S2 back to the strips S1. Thus, except for the brief slow-down in the transition between creels 35 and 36, and vice versa, the supply of strips S to the cutting mechanism 25 is a continuous operation.

It is to be observed, however, that it is possible to provide for an extremely thick preform P by combining the output of creels 35 and 36. In this mode of operation, the strips S1 and S2 would both be fed simultaneously through the drive nip assembly 210, such that in the exemplary form shown in the drawings, a preform P having up to 12 layers of fibrous matting could be constructed. It is noted, however, that in the instance of simultaneous usage of both creels 35, 36 the process can no longer be continuous in that the system 20 would necessarily be stopped while both of the creels 35 and 36 are reloaded with new rolls R when the fibrous matting M is depleted from the rolls R. It is also to be understood, as noted above, that the simultaneous use of both the creels 35 and 36 could be accompanied by the provision of a fiber feeder mechanism 22 for each of creels 35 and 36.

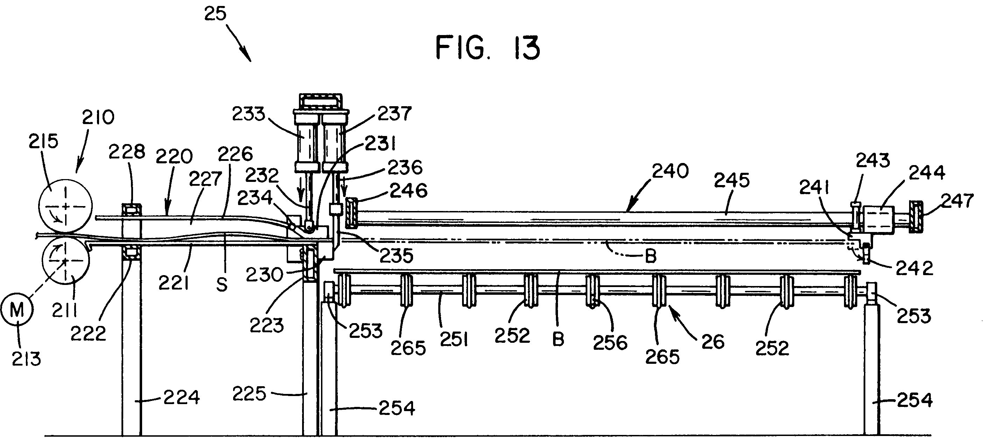

The strips S exiting the creel transfer mechanism 24 through the drive nip assembly 210 are directed to the cutting mechanism 25, as generally depicted in Figures 1 and 2. As best seen in Figure 13, the cutting mechanism 25 has a hump box, generally indicated by the numeral 220, into which the strips S are directed. As shown, the hump box 220 has a table 221 which may be substantially planar and which supports the underside of the strips S across the full lateral extremity thereof. The table 221 may be supported on a pair of cross beams 222 and 223, attached to stanchions 224 and 225. The strips S are vertically upwardly constrained by an upper guide 226 which with the table 221 forms a vertically upwardly and downwardly enclosed channel 227 for the strips S. The upper guide 226 is supported proximate the drive nip assembly 210 by a cross beam 228, which may be supported by the stanchion 224. The attachment of the upper guide 226 to the cross beam 228 may be adjustable for purposes of varying the vertical distance between upper guide 226 and table 221. It may also be advantageous for upper guide 226 to be curved such that channel 227 converges in the left-to-right direction as viewed in Figure 13.

The strips S conducted through the channel 227 depart the table 221 and pass across a pad 230 which may also be attached to cross beam 223. The pad 230 operates in conjunction with a clamping bar 231 which is vertically movable as by mounting on the piston rod 232 of a cylinder 233. Thus, the clamping bar 231 may be moved downwardly by actuation of cylinder 233 to clamp the strips S against the pad 230 to stop the travel of the strips S through the cutting mechanism 25. The retraction of piston rod 232 of cylinder 233 to vertically raise the clamping bar 231 permits free traverse of the strips S. The extremity of upper guide 226 opposite the beam 228 terminates proximate to the clamping bar 231 and may, as shown in Figure 13, be attached thereto as by a hinge joint 234.

The pad 230 also serves as a shear surface for a linear blade 235, which is preferably positioned proximate to the clamping bar 231. The blade 235 is mounted on a piston rod 236 of a cylinder 237, which moves the blade 235 vertically upwardly out of the path of the strips S and selectively moves the blade 235 downwardly to make a high-speed cut of strips S, which are momentarily in a stopped position as effected by the clamping bar 231. Cylinders 233 and 237 are preferably pneumatic; however, hydraulic and mechanically actuated devices of this type are commercially available.

The cutting mechanism 25 also has a strip gripping assembly, generally indicated by the numeral 240, for grasping and paying out leading edges of the strips S, to thus maintain the strips S in tension. The gripping assembly 240 has a fixed finger 241 and a movable finger 242, which is actuated by a cylinder 243 for grasping and releasing strips S between the fingers 241 and 242. The fixed finger 241 may be movably mounted as by known double acting rodless cylinders having yokes 244 that are magnetically coupled to a controllably movable piston (not shown) within cylinder tubes 245 which extend between frame members 246 and 247. The travel of the yokes 244 may be controlled by proximity switches (not shown) in a known manner. The cylinder tubes 245 are preferably of a longitudinal extent slightly greater than the length of the longest dimension of the preforms P to be produced by the system 20.

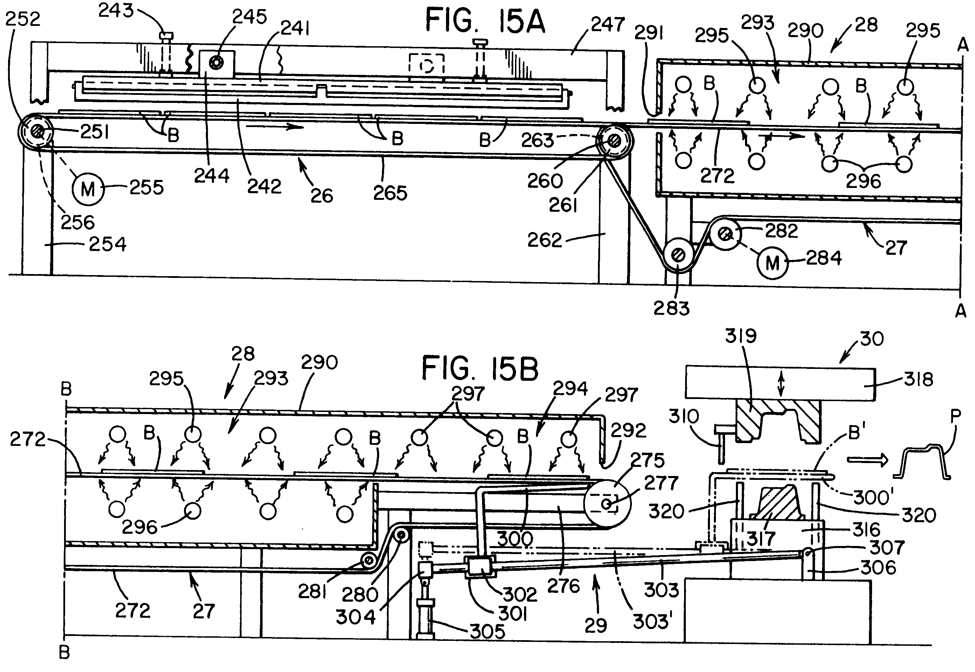

Positioned just below the gripping assembly 240 is take-away conveyor 26. The take-away conveyor 26 is of a special construction as seen in Figures 1, 2, 13, and 15A. The take-away conveyor 26 has a head shaft 251 of a length substantially the length of cylinder tubes 245 which mounts a plurality of spaced disks 252 that rotate with the shaft 251. The head shaft 251 may be mounted in blocks 253 positioned atop posts 254. The head shaft 251 is driven by a motor 255, as schematically seen in Figure 15A, which may preferably be a variable speed motor for adjusting the rotational speed of head shaft 251 and disks 252 attached thereto. The take-away conveyor 26 also has a tail shaft 260 which mounts a plurality of spaced disks 261 that are freely rotatable about the tail shaft 260. The tail shaft 260 may be similarly mounted on posts 262. The disks 252 and 261 have central grooves 256 and 263, respectively, to receive wires 265 extending between spaced disks 252 and 261 on the shafts 251 and 260, respectively. The spaced wires 265 thus form an intermittent planar conveying surface defined by the upper surface of the wires 265 reposing on each of the disks 252, 261.

The operation of the cutting mechanism 25 is best appreciated in relation to the schematic depictions of Figures 14A-E of the drawings. Figure 14A shows the strip gripping assembly 240 paying out or pulling the leading edge of strips S by virtue of the cylinder 243 having been actuated to move the movable finger 242 into clamping engagement with the fixed finger 241. The clamping bar 231 and blade 235 have been retracted by their pistons 233 and 237, respectively, such as to provide unimpeded passage of the strips S over the pad 230. The rate of movement of the fingers 241, 242 is substantially equivalent to the rate of material departure through drive nip assembly 210 to maintain a controlled draw force on the strips S so they are suspended with a minimum of intermediate sag between the pad 230 and the fingers 241, 242. The length to which the strips S are cut is determined by the extent of payout, i.e., the distance of travel of fingers 241, 242 from the pad 230, as measured by conventional electronic devices.

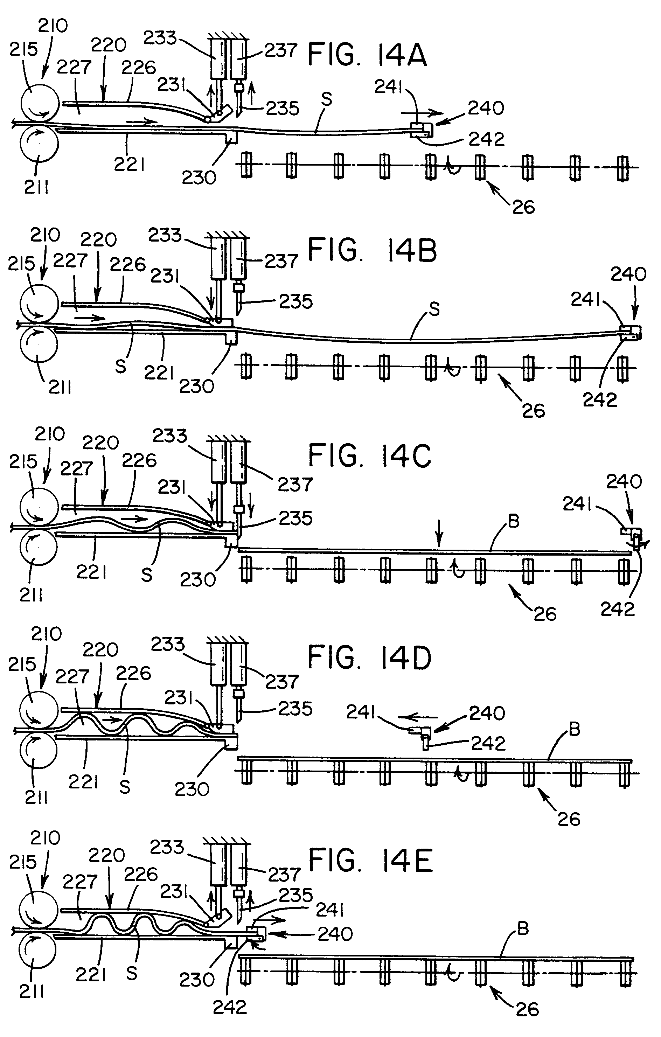

When the appropriate length for the strips S is reached, the clamping bar 231 is actuated by cylinder 233 to clamp the strips S against the pad 230 to stop the travel of the strips S to the right of the pad 230 as seen in Figure 14B. Instantaneously thereafter, the blade 235 is moved downwardly by cylinder 237 past the pad 230 to sever the strips S into mold charge blanks B as seen in Figure 14C. Simultaneously with the actuation of the blade 235, the movable finger 242 is actuated by cylinder 243 to release the leading edge of the mold charge blanks B which are gravity deposited on the surface of take-away conveyor 26. Figure 14C shows the mold charge blanks B, after severing by the blade 235 and release from the fingers 241, 242, descending toward the take-away conveyor 26.

Figure 14D shows the mold charge blanks B, which are hereinafter so referenced after being severed from the strips S by the cutting mechanism 25, being conveyed away by take-away conveyor 26 during return of the fingers 241, 242 to a position proximate the pad 230. The return speed of fingers 241, 242 may be extremely rapid in relation to the speed at which the strips S were paid out as depicted in Figure 14A. As will be noted from Figure 14D, the clamping bar 231 remains in engagement with the pad 230 subsequent to the cutting operation effected by blade 235.

Since the drive nip assembly 210 continuously drives, surplus material which necessarily accumulates between the drive nip assembly 210 and the clamping bar 231 is taken up by the hump box 220. As can be noted in viewing Figures 14B-14E, the strips S progressively assume a wave form configuration of increasing magnitude and decreasing period, thus preventing deleterious deformation or creasing of the strips S and the layers of fibrous matting M therein. When the returning fingers 241, 242 reach a position closely proximate to the pad 230, as seen in Figure 14E, the clamping bar 231 is retracted by cylinder 233. The release of the constraint upon the strips S heretofore imposed by the hump box 220 results in the strips S springing outwardly of pad 230 into engagement with the fingers 241, 242.

Immediately thereafter, the cylinder 243 is actuated to move the movable finger 242 into engagement with fixed finger 241 to clamp the leading edge of strips S. The gripping mechanism 240 then commences payout of a subsequent set of strips S, and the sequence of Figures 14A-14E repeats.

It is to be noted that the speed of the take-away conveyor 26 relative to the operation of cutting mechanism 25 must be sufficient so that the mold charge blanks B, which are deposited during the cutting operation by blade 235, are displaced a sufficient distance laterally so that they are out from under the subsequent set of strips S at the time they are severed by the blade 235, such that the strips S, when severed, do not drop on the mold charge blanks B from the prior cutting operation. It is, however, preferred if it is desired to maintain a uniform spacing between the mold charge blanks B on take-away conveyor 26 that the subsequent cut of strips S occurs substantially coincident with the departure of the mold charge blanks B from a position underlying the strips S when in position to be severed by blade 235.

While the take-away conveyor 26 is shown disposed for displacing the mold charge blanks B laterally or substantially perpendicular to the direction of payout of the strips S in cutting mechanism 25, it will be understood that other directions may be advantageous for particular applications. For some purposes, it might be advantageous that the take-away conveyor 26 transport the mold charge blanks B in a direction aligned with the direction of payout of the strips S. Factors such as the geometric configuration of the preform P and the alignment of predominant portions of the fibrous material thereof may be contributing factors in determining an optimum orientation of take-away conveyor 26 relative to the direction of payout of the strips S.

Operatively interrelated with the take-away conveyor 26 is oven conveyor 27, as show in figs. 15A and 15B. In order to provide an uninterrupted conveying surface, the oven conveyor 27 may mount disks 271 on the tail shaft 260 of the take-away conveyor 26 (Fig. 1). The disks 271 may be interspersed between and identical to the disks 261. The disks 271, in a manner similar to disks 261, mount wires 272 to form a conveyor surface for the mold charge blanks B.

As seen in Fig. 15B, a second set of disks 275 are mounted to similarly carry the wires 272. Thus, the oven conveyor 27 has the disks 271 at the input to the oven assembly 28 and the disks 275 proximate the output of the oven assembly 28. The disks 275 are each mounted by separate horizontally extending fixed beams 276 on stub shafts 277 (Figs. 2 and 15B).

The oven conveyor 27 may have a return path for wires 272, which may conveniently be located exteriorly of the oven assembly 28. As shown, the conveyor return path is defined by idler disks 280 and 281 (Fig. 15B), a drive shaft 282 and an idler shaft 283 (Fig. 15A). The drive shaft 282 may be powered by a conventional variable speed motor 284. The motor 284 enables adjustment in the lateral spacing between blanks B as they transcend from the take-away conveyor 26 to the proximity of the mold charge blanks B remains consistent from the cutting of the strips S into the mold charge blanks B through the oven assembly 28. If a greater spacing between mold charge blanks B is desired, as is depicted in Fig. 15A, the motor 284 may be adjusted to a higher speed such that conveyor wires 272 travel at a greater speed. In this case, the lateral spacing between the mold charge blanks B is expanded as the mold charge blanks B transcend between the conveyors 26 and 27. The speed differential of conveyors 26 and 27 can, or course, be adjusted to achieve any desired lateral spacing between the mold charge blanks B.

In instances where the fibrous matting M incorporated in the mold charge blanks B includes a thermoplastic binder or otherwise requires heating, an oven assembly 28 may be operatively interrelated with oven conveyor 27. The oven assembly 28 may have a generally rectangular enclosure 290, as seen in Figs. 1, 15A and 15B. The enclosure 290 has elongate slots 291 and 292 at opposite ends to permit the ingress and egress, respectively, of the wires 272 of oven conveyor 27 and the mold charge blanks B transported thereon. Many conventional ovens are adaptable for operations of this type; however, salient features of an appropriate oven configuration are outlined hereinafter.

The oven assembly 28 preferably has a first heating zone, generally indicated by the numeral 293, and a second heating zone, generally indicated by the numeral 294, as seen in Figures 15A and 15B. The first heating zone 293 is characterized by an upper row of heating elements 295 and a lower row of heating elements 296. The heating elements 295, 296 are appropriately selected and spaced so that thermoplastic binder material present in the various layers of fibrous matting M of mold charge blanks B traversing oven assembly 28 on oven conveyor 27 will be heated above the melting point.

The second heating zone 294 may be provided with a single, upper row of heating elements 297. The heating elements 297 are selected and spaced to maintain the mold charge blanks B at an optimum temperature for molding upon arrival at the press 30.

The mold charge blanks B exiting the oven assembly 28 on oven conveyor 27 are transferred to the press 30 by shuttle assembly 29. The shuttle assembly 29 is preferably of a design which permits high-speed operation so as to minimize cooling of the mold charge blanks B during handling by the shuttle assembly 29. As shown, the shuttle assembly 29 consists of a plurality of L-shaped fingers 300 (Figures 2 and 15B) which nest between the disks 275 and their supporting beams 276 and, thus, the wires 272 of the oven conveyor 27. There are preferably fingers 300 nested between each of the wires 272 such as to extend the lateral width of the oven conveyor 27 to, thus, provide the capability of supporting a mold charge blank B intermittently over its entire extent laterally of oven conveyor 27. The fingers 300 may be supported on a cross beam 301 which is attached at its extremities to yokes 302 of double-acting rodless cylinders. The yokes 302 controllably move on cylinder tubes 303, which are preferably positioned laterally to either side of oven conveyor 27 and from a position under oven conveyor 27 relative to disks 275 to a position at the press 30. The cylinder tubes 303 are connected to a rod 304 which extends the lateral width of oven conveyor 27 and which has cylinders mounted thereunder for selectively vertically displacing the cylinder tubes 303 and, thus, the fingers 300. The extremities of the cylinder tubes 303 proximate the press 30 are pivotally mounted on an arm 306 by a pin 307.

Thus, the fingers 300 are capable of being moved into position under the oven conveyor 27 by actuating cylinder 305 to move the cylinder tubes 303 to the solid line position depicted in Figure 15B. When a mold charge blank B arrives at the position depicted in Figure 15B proximate to the disks 275, the cylinders 305 are actuated to move the cylinder tubes 303 vertically upwardly to the chain line position 303' of Figure 15B. This movement of the cylinder tubes 303 moves the fingers 300 upwardly between the wires 272 of oven conveyor 27 such that the mold charge blank B is vertically displaced to a position where it is supported exclusively by fingers 300 rather than the wires 272 of conveyor 27. The yokes 302 of the double acting rodless cylinders are then actuated to move the fingers 300 supporting a mold charge blank B to the right in Figure 15B to a position depicted in chain lines, with the fingers designated 300' supporting a mold charge blank designated B.

With a mold charge blank B thus positioned in regard to press 30, a plurality of stripping arms 310 are brought into play to maintain the mold charge blank B in the loading position in the press 30. As shown schematically in Figures 2 and 15B, the press 30 may be of various conventional configurations involving generally a press base on which is supported a lower platen 315 which carries a lower mold section 316. An upper platen 318 is movably mounted vertically with respect to the lower platen 315 and carries therewith an upper mold section 319. The stripping arms 310 may be movable with the upper platen 318 or the upper mold section 319, as shown, or may be independently supported and actuated. As shown, the stripping arms 310 move downwardly between the fingers 300, as positioned in relation to the press, so that the horizontal withdrawal of fingers 300 from the position in proximity to press 30 results in a stripping of the mold charge blank B from the fingers 300, with the mold charge blank B supported in the loading position as by tensioning bars 320 or as otherwise known to persons skilled in the art. The retraction of the fingers 300 from the loading position is effected by travel of the yokes 302 along cylinder tubes 303. The cylinders 305 are contemporaneously actuated to vertically lower the cylinder tubes 303 to move the fingers 300 under wires 272 back to the solid line position depicted in Figure 15B to await the arrival of a subsequent mold charge blank B into the position above the fingers 300 depicted in Figure 15B.

The actuation of the press 30 by way of closure of the upper platen 318 to effect the trimming and molding of a mold charge blank B into a completed preform P may be in accordance with known technology for the molding of preforms P. As shown in Figure 15B in a schematic sense, the molded preform P may be stripped from the lower mold section 316 and upper mold section 319, either manually or by suitable robotics. The completed preform P may then be placed directly into molds for a final molding process, such as RTM or S-RIM, as hereinabove described, or stored preparatory to such molding operations at a later time. As noted hereinabove, in applications where molding of the mold charge blanks B to a molded preform P is not required, the mold charge blanks may be transferred by shuttle assembly 29 directly to the molding tool for the final molding process.

## Claims

1. Apparatus for continuously producing mold charge blanks for molding processes comprising, a creel assembly for laying up a plurality of layers of fibrous matting to form a compound sheet of fibrous matting, cutting means for severing the compound sheet into mold charge blanks having the desired dimensions, an oven conveyor, for transporting the mold charge blanks through heating means for the controlled heating thereof, and a shuttle assembly for transferring the mold charge blanks from said conveyor to press means, said press means effecting molding of the mold charge blanks.

2. Apparatus according to Claim 1, wherein said creel assembly includes a pair of creels alternately operable to provide a continuous compound sheet of fibrous matting.

3. Apparatus according to Claim 2, wherein each of said creels has means for mounting at least two rolls of fibrous matting in horizontally-spaced relation with the axes of said rolls being substantially parallel.

4. Apparatus according to any one of Claims 1 to 3, including fiber feeder means, operatively interrelated with said creel assembly for effecting disposition of reinforcing fibers between the layers of fibrous matting to form a reinforced compound sheet of fibrous matting.

5. Apparatus according to Claim 4, wherein said fiber feeder means is supplied with reinforcing fibers from a reprocessing system for segregating scrap reinforced fibrous matting generated by said cutting means and press means during cutting and molding operations into individual fibers, said reprocessing system including collection and processing means for receiving scrap reinforced fibrous matting from said cutting means and said press means and for processing the scrap into individual fibers to be supplied to said fiber feeder means.

6. Apparatus according to Claim 1, including slitting means for longitudinally cutting the compound sheet into a plurality of strips and creel transfer means interposed between said slitting means and said cutting means for selectively effecting transition in the supply of the fibrous matting from one creel to the other creel of said creel assembly.

7. Apparatus according to Claim 1, including a take-away conveyor, for moving the mold charge blanks from said cutting means to said oven conveyor and wherein said cuttingmeans has movable gripping means for suspending the compound sheet while paying out the requisite length.

8. Apparatus according to Claim 7, including drive means for said take-away conveyor and drive means for said oven conveyor, said conveyors sharing a common shaft and said drive means for said oven conveyor moving said oven conveyor at a greater linear velocity, whereby the lateral spacing between said mold charge blanks increases upon traverse of said mold charge blanks from said take-away conveyor to said oven conveyor.

9. Apparatus according to Claim 1, including a creel assembly for laying up a plurality of layers of fibrous matting to form a compound sheet of fibrous matting, fiber feeding means operatively interrelated with said creel assembly for effecting disposition of fibers between the layers of fibrous matting to form a compound sheet of reinforced fibrous matting, reprocessing system means for converting scrap matting to reinforcing fibers, slitting means for cutting the compound sheet into a plurality of strips of a width substantially equal to one dimension of the mold charge blanks, creel transfer means for selectively effecting transition in the supply of the fibrous matting from one creel to another creel of said creel assembly, cutting means for severing the strips into mold charge blanks of a length substantially equal to another dimension of the mold charge blanks, a take-away conveyor for moving the mold charge blanks from said cutting means, an oven conveyor for transporting the mold charge blanks from the take-away conveyor to

means for the controlled heating thereof, and shuttle assembly means for transferring the mold charge blanks from said oven conveyor to press means, said press means effecting molding of the mold charge blanks.

10. A method for the continuous production of mold charge blanks for molding processes comprising the steps of, laying up a plurality of layers of fibrous matting to form a compound sheet of fibrous matting, cutting the compound sheet into mold charge blanks having the desired dimensions, transporting the mold charge blanks through an oven for the controlled heating thereof, transferring the mold charge blanks from the oven to a press, and molding the mold charge blanks in the press.

11. A method according to Claim 10, including the step of alternately supplying a continuous compound sheet of fibrous matting from one of a pair of creels.

12. A method according to Claim 11, including the step of mounting at least two rolls of fibrous matting in each of the creels in horizontally-spaced relation with the axes of said rolls being substantially parallel.

13. A method according to any one of Claims 10 to 12, including the step of effecting disposition of reinforcing fibers between the layers of fibrous matting to form a compound sheet of reinforces fibrous matting.

14. A method according to any one of Claims 10 to 13, wherein said cutting step includes the step of gripping and

suspending the compound sheet while paying out the requisite length for a mold charge blank.

15. Creel assembly apparatus for use in producing mold charge blanks for molding processes from rolls of fibrous matting comprising, a frame, a plurality of roll mounting means attached to said frame, means for supporting rolls of fibrous matting for free rotation and lateral displacement relative to said frame, steering means controlling the lateral position of the fibrous matting unwrapped from the rolls, and feed path means for joining the fibrous matting into layers forming a compound sheet.

16. Fiber feeder apparatus for depositing reinforcing fibers on fibrous matting in the production of mold charge blanks for molding processes comprising, a hopper for receiving and storing the reinforcing fibers, fiber placement means for engaging the reinforcing fibers in said hopper and for discharging the reinforcing fibers longitudinally along the fibrous matting at selected locations laterally thereof, and means for effecting adherence of the reinforcing fibers to said fiber placement means in alignment thereon.

17. Reprocessing apparatus for converting fibrous matting scrap material generated in the production of mold charge blanks for molding processes into reinforcement for the mold charge blanks comprising, means for collecting the scrap generated in the production of the mold charge blanks means for processing the scrap into selectively sized individual fibers, and fiber feeder means for depositing the individual fibers as reinforcing fibers on the fibrous matting employed in the production of the mold charge blanks.

18. Creel transfer apparatus for selectively unwinding fibrous matting from a plurality of sources for the production of mold charge blanks for molding processes comprising, a creel assembly having a plurality of creels each mounting rolls of the fibrous matting, drive nip means for unwinding the fibrous matting from said creel assembly, and transfer nip means for supplying fibrous matting from a selected one of said plurality of creels of said creel assembly to said drive nip means.

19. Cutting apparatus for severing strips of fibrous matting into mold charge blanks employed in the production of such mold charge blanks for molding processes comprising, gripping means for grasping the strips of fibrous matting, means for moving the gripping means for paying out a selected length of the strips of the fibrous matting, and cutting means for simultaneously severing the strips of the fibrous matting into mold charge blanks.

20. A method for continuously laying up fibrous matting into a compound sheet for producing mold charge blanks for molding processes comprising the steps of, supporting a plurality of rolls of the fibrous matting in close proximity to each other, simultaneously unwrapping fibrous matting from the plurality of rolls, steering the fibrous matting during unwrapping into edgewise coincidence, and joining the fibrous matting into layers forming the compound sheet.

21. A method for depositing reinforcing fibers on fibrous matting formed into a compound sheet for producing mold charge blanks for molding processes comprising the steps of, storing a quantity of reinforcing fibers in a hopper, engaging the reinforcing fibers in the hopper, removing the reinforcing fibers from the hopper, and discharging the reinforcing fibers onto the fibrous matting at selected locations laterally thereof.

22. A method for reprocessing fibrous matting scrap material generated in the production of mold charge blanks for molding processes into reinforcement for the mold charge blanks comprising the steps of collecting the scrap material generated in the production of the mold charge blanks, processing the scrap material into selectively sized individual fibers, and depositing the individual fibers on the fibrous matting used in the production of the mold charge blanks.

23. Apparatus for a continuous fiber reinforced molding process employing mold charge blanks and a hardenable fluid chemical comprising, a creel assembly for laying up a plurality of layers of fibrous matting to form a compound sheet of fibrous matting, cutting means for severing the compound sheet into mold charge blanks having the desired dimensions, conveyor means for transporting the mold charge blanks away from said cutting means, and shuttle assembly means for transferring the mold charge blanks from said conveyor means to press means, said press means having mold means for effecting molding of the mold charge blanks with the hardenable fluid chemical.

24. Method according to Claim 10, including the steps of, laying up a plurality of layers of fibrous matting to form a compound sheet of fibrous matting, cutting the compound sheets into mold charge blanks having the desired dimensions, transporting the mold charge blanks away from the cutting operation on a conveyor, transferring the mold charge blanks from the conveyor to a press, and molding the mold charge blanks with a hardenable fluid chemical in the press.

FIG. 1

FIG. 2

EP 0 473 422 A1

# FIG. 3

# FIG. 4

FIG. 5

# FIG. 6

# FIG. 7

# FIG. 8

## FIG. 9

FIG. 10

FIG. 11

METERING NIP    166

SLITTER    167    165

CHOPPER    168

FIBER SHREDDER    169

# FIG. 12

FIG. 13

FIG. 14A

FIG. 14B

FIG. 14C

FIG. 14D

FIG. 14E

FIG. 15A

FIG. 15B

EP 0 473 422 A1

**European Patent Office**

**EUROPEAN SEARCH REPORT**

Application Number

| DOCUMENTS CONSIDERED TO BE RELEVANT | | | EP 91307899.4 |
|---|---|---|---|
| Category | Citation of document with indication, where appropriate, of relevant passages | Relevant to claim | CLASSIFICATION OF THE APPLICATION (Int. Cl.5) |
| A | <u>US - A - 3 244 784</u> <br> (LE ROY R. BOGGS) <br> * Fig. 1 * <br> -- | 1-4,9- <br> 11,23 | B 29 C 67/18 <br> B 29 C 67/14 <br> B 29 D 9/00 <br> B 29 B 11/16 |
| A | <u>US - A - 3 992 240</u> <br> (KUEHN) <br> * Totality * <br> --- | 1-4,9, <br> 10 | |
| A | <u>US - A - 3 291 672</u> <br> (SONNEBORN) <br> * Totality * <br> -- | 1-4 | |
| A | <u>US - A - 4 188 355</u> <br> (GRAHAM) <br> * Totality * <br> ---- | | |
| | | | TECHNICAL FIELDS SEARCHED (Int. Cl.5) |
| | | | B 29 B <br> B 29 C <br> B 29 D |
| | The present search report has been drawn up for all claims | | |

| Place of search | Date of completion of the search | Examiner |
|---|---|---|
| VIENNA | 08-11-1991 | REININGER |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

................................................................

& : member of the same patent family, corresponding document

EPO FORM 1503 03.82 (P0401)

31